# EUROPÄISCHE PATENTANMELDUNG

(11) **EP 4 344 037 A1**
(43) Veröffentlichungstag der Anmeldung: **27.03.2024**
(21) Anmeldenummer: 22197628.5
(22) Anmeldetag: 26.09.2022
(51) Int. Cl.: H02M 1/00, H02M 3/28, H02M 3/335, H02M 1/10, H02M 3/158

(54) **KOMBINIERTER DC/DC-WANDLER HOHER LEISTUNG**

(71) Anmelder: Siemens Aktiengesellschaft, 80333 München (DE)
(72) Erfinder: Unterweger, Siegmar, 81549 München (DE)
(74) Vertreter: Siemens Patent Attorneys

(57) **Zusammenfassung**

Zwei Phase-Shift-Full-Bridge-DC/DC-Wandler bilden zusammen einen kombinierten DC/DC-Wandler, bei dem eine Umschaltung zwischen einem parallelen und seriellen Betrieb der DC/DC-Wandler durch eine ausgangsseitige Serienschaltung von Leistungshalbleitern vorgenommen werden kann.

## Beschreibung

Die Erfindung betrifft einen kombinierten DC/DC-Wandler, der zwei zusammengeschaltete DC/DC-Wandler des Phase-Shift-Typs umfasst.

Für galvanisch getrennte DC/DC-Wandler mit großem Ausgangsspannungsbereich, wie sie beispielsweise in Ladestationen für Elektrofahrzeuge verwendet werden, kann es vorteilhaft sein, die Ausgangsleistung auf zwei Submodule aufzuteilen. Dabei ist die Sekundärseite so gestaltet, dass eine Umschaltung zwischen einem parallelen Betrieb der beiden Submodule für einfache Spannung und doppelten Strom und einem seriellen Betrieb der Submodule für doppelte Spannung bei einfachem Strom ermöglicht wird.

In einem solchen kombinierten DC/DC-Wandler wird diese Umschaltung beispielsweise mit Relais oder Schützen realisiert, im einfachsten Fall mit zwei Wechselschaltern. Diese unterbrechen für die Umschaltung den ausgangsseitigen Leistungsfluss kurz. Nachteilig ist hieran, dass der gesamte Spannungsbereich so nur stückweise unterbrechungsfrei abgefahren werden kann.

Es ist Aufgabe der Erfindung, einen verbesserten kombinierten DC/DC-Wandler anzugeben, der die genannten Nachteile überwindet.

Diese Aufgabe wird durch einen kombinierten DC/DC-Wandler mit den in Anspruch 1 angegebenen Merkmalen gelöst.

Der erfindungsgemäße kombinierte DC/DC-Wandler umfasst einen ersten DC/DC-Wandler des Phase-Shift-Typs, aufweisend einen ersten Transformator und einen an die Sekundärseite des ersten Transformators angeschlossenen ersten Gleichrichter mit einem ersten oberen und einem ersten unteren Gleichrichterausgang. Er umfasst weiterhin einen zweiten DC/DC-Wandler des Phase-Shift-Typs, aufweisend einen zweiten Transformator und einen an die Sekundärseite des zweiten Transformators angeschlossenen zweiten Gleichrichter mit einem zweiten oberen und einem zweiten unteren Gleichrichterausgang.

Der kombinierte DC/DC-Wandler weist ferner einen zwischen den ersten oberen und den zweiten oberen Gleichrichterausgang geschalteten ersten Leistungshalbleiter, einen zwischen den zweiten oberen und den ersten unteren Gleichrichterausgang geschalteten zweiten Leistungshalbleiter, der ein steuerbarer Halbleiterschalter ist, und einen zwischen den ersten unteren und den zweiten unteren Gleichrichterausgang geschalteten dritten Leistungshalbleiter auf.

Es ist eine Steuerungseinrichtung für die Halbleiterschalter des kombinierten DC/DC-Wandlers vorhanden. Die Steuerungseinrichtung ist ausgestaltet, für einen ersten Betriebsmodus, in dem der erste und zweite DC/DC-Wandler parallelgeschaltet sind, den zweiten Leistungshalbleiter abzuschalten und den ersten und dritten Leistungshalbleiter einzuschalten, soweit es sich beim ersten und dritten Leistungshalbleiter um steuerbare Leistungshalbleiter handelt. Weiterhin ist die Steuerungseinrichtung ausgestaltet, für einen zweiten Betriebsmodus, in dem der erste und zweite DC/DC-Wandler seriell geschaltet sind, den zweiten Leistungshalbleiter einzuschalten und den ersten und dritten Leistungshalbleiter auszuschalten, soweit es sich um steuerbare Leistungshalbleiter handelt.

Vorteilhaft wird dadurch mit einer sehr geringen Zahl von Leistungshalbleitern erreicht, dass eine Umschaltung zwischen einem parallelen und einem seriellen Betriebsmodus deutlich schneller als mit mechanischen Schaltern erfolgen kann.

Die erfindungsgemäße Topologie ermöglicht also eine nahtlose Umschaltung zwischen Parallel- und Serienbetrieb, wobei die Umschaltzeit einer Taktperiode entspricht. Der gesamte Ausgangsspannungsbereich kann also hierdurch lückenlos abgedeckt werden.

Weiterhin wird durch das Wegfallen mechanischer Komponenten die Zuverlässigkeit verbessert und die Lebensdauer erhöht.

Besonders vorteilhaft ist bei der erfindungsgemäßen Topologie, dass Leistungshalbleiter auf die gleiche Sperrspannung wie die Brückenelemente der Gleichrichter, also beispielsweise deren Dioden, ausgelegt werden können. Die Leistungshalbleiter müssen nicht für die maximale Ausgangsspannung des kombinierten DC/DC-Wandlers ausgelegt werden.

Bei dem ersten und zweiten DC/DC-Wandler handelt es sich um solche des Phase-Shift-Full-Bridge-Typs. Der erste DC/DC-Wandler umfasst dabei einen ersten bis vierten Halbleiterschalter, die eine erste Vollbrücke bilden, eine erste Resonanzspule, die mit der Primärseite eines ersten Transformators eine erste Serienschaltung bildet, wobei die erste Serienschaltung zwischen die Mittelpunkte der Halbbrücken der ersten Vollbrücke geschaltet ist. Der zweite DC/DC-Wandler ist analog aufgebaut, umfasst also weiterhin einen fünften bis achten Halbleiterschalter, die eine zweite Vollbrücke bilden, eine zweite Resonanzspule, die mit der Primärseite eines zweiten Transformators eine zweite Serienschaltung bildet, wobei die zweite Serienschaltung zwischen die Mittelpunkte der Halbbrücken der zweiten Vollbrücke geschaltet ist.

Vorteilhafte Ausgestaltungen des erfindungsgemäßen kombinierten DC/DC-Wandlers gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen sein:

Die Steuerungseinrichtung kann ausgestaltet sein, den ersten bis vierten Halbleiterschalter sowie den fünften bis achten Halbleiterschalter nach Art eines Phase-Shift-Wandlers zu betreiben. Dabei wird für jeden der zwei DC/DC-Wandlerzwischen den Schaltzeitpunkten der Halbleiterschalter der ersten Halbbrücke der jeweiligen Vollbrücke und den Schaltzeitpunkten der Halbleiterschalter der zweiten Halbbrücke eine als Phasenverschiebung wirkende Zeitdauer eingeführt. Diese Zeitdauer führt dazu, dass die diagonal liegenden Halbleiterschalter der Vollbrücke nicht mehr im Wesentlichen gleichzeitig an- und ausschalten, sondern je nach Betriebssituation deutlich zueinander versetzt. Diese Versetzung oder Phasenverschiebung kann so deutlich sein, dass die beiden oberen Halbleiterschalter einer Vollbrücke oder die beiden unteren Halbleiterschalter der Vollbrücke für einen Überlappzeitraum gemeinsam eingeschaltet sind.

Um den Aufbau als Phase-Shift DC/DC-Wandler zu vervollständigen, umfasst der kombinierte DC/DC-Wandler zweckmäßig eine Ausgangs-Spule und einen Glättungskondensator, wobei die Ausgangsinduktivität in Serie und der Glättungskondensator parallel zu einer angeschlossenen Last angeordnet sind. Der erste und zweite DC/DC-Wandler sind also als Phase-Shift-Wandler unvollständig, dass sie diese beiden Bauteile nicht jeder für sich umfassen, sondern nur gemeinsam als Ausgang für den kombinierten DC/DC-Wandler. Sie werden aber in diesem Text trotzdem als Phase-Shift DC/DC-Wandler bezeichnet.

Phase-Shift DC/DC-Wandler bieten besonders geringe Schaltverluste durch Zero-Voltage-Switching. Beim Phase-Shift-Prinzip wirkt die Phasenverschiebung als Tastgrad, wobei eine geringe Phasenverschiebung einem hohen Tastgrad entspricht und eine hohe Phasenverschiebung einem geringen Tastgrad. Die Phasenverschiebung führt dazu, dass zu einem Teil der Anschaltdauern die beiden oberen Halbleiterschalter oder die beiden unteren Halbleiterschalter der Vollbrücke zusammen eingeschaltet sind und somit die Primärseite des jeweiligen Transformators kurzgeschlossen ist.

DC/DC-Wandler des Phase-Shift-Typs werden häufig unidirektional ausgeführt und verwenden daher einen diodenbasierten Brückengleichrichter. Es ist aber auch möglich, den Gleichrichter aktiv auszuführen unter Verwendung von Halbleiterschaltern und damit einen bidirektionalen kombinierten DC/DC-Wandler des Phase-Shift-Typs bereitzustellen.

Die Steuerungseinrichtung kann ausgestaltet sein, im ersten Betriebsmodus den zweiten Leistungshalbleiter in einer ersten Betriebssituation auszuschalten, in der am Transformator eine Spannung anliegt und den zweiten Leistungshalbleiter in einer zweiten Betriebssituation einzuschalten, in der keine Spannung am Transformator anliegt.

Wie bereits beschrieben, ist der zweite Leistungshalbleiter, der ein Halbleiterschalter ist, im ersten Betriebsmodus, d.h. bei einer Parallelschaltung von erstem und zweitem DC/DC-Wandler normalerweise ausgeschaltet. Das bleibt auch der Fall in der ersten Betriebssituation, in der am ersten und/oder zweiten Transformator eine Spannung anliegt, also Leistung übertragen wird an die Sekundärseite. In der zweiten Betriebssituation, in der am ersten und/oder zweiten Transformator keine Spannung anliegt, sondern diese kurzgeschlossen ist und somit keine Leistung übertragen wird, wird der zweite Leistungshalbleiter aber eingeschaltet.

In der zweiten Betriebssituation, in der keine Spannung am Transformator anliegt und somit auch keine Energie im Transformator übertragen wird, treibt die in der Ausgangs-Spule des kombinierten DC/DC-Wandlers magnetisch gespeicherte Energie dennoch einen Stromfluss weiter, der durch die Dioden des Gleichrichters fließt. Der eingeschaltete zweite Leistungshalbleiter bietet dazu einen weiteren Strompfad. Der Strom fließt also nun zusätzlich durch den zweite Leistungshalbleiter anstatt nur durch die Dioden des Gleichrichters.

Dadurch werden zum einen die Gleichrichterdioden entlastet, d.h. die Verluste der Dioden sinken. Ist der zweite Leistungshalbleiter ein MOSFET, weist er durch seine ohmsche Charakteristik ein besseres Durchlassverhalten als eine Diode gleicher Leistungsklasse auf. Es ist somit möglich, die Halbleiterverluste der gesamten Schaltung abzusenken. Weiterhin verteilen sich die elektrischen Verluste auf mehr Schalter, was in der Regel für die Kühlung wünschenswert ist, da so eine bessere Wärmeverteilung auf dem Kühlkörper erzielt wird.

Das Einschalten des zweiten Leistungshalbleiters passiert insbesondere in den Zeitdauern, in denen die Primärseite des ersten und/oder zweiten Transformators kurzgeschlossen ist durch eine überlappende Einschaltdauer der beiden oberen Halbleiterschalter oder der beiden unteren Halbleiterschalter der jeweiligen Vollbrücke. Das Abschalten des zweiten Leistungshalbleiters ist somit Teil des normalen Schaltzyklus und die Schaltvorgänge passieren doppelt so oft wie die vom ersten bis achten Halbleiterschalter, er schaltet also mit der doppelten Frequenz.

Der erste und/oder dritte Leistungshalbleiter kann steuerbar sein. Es kann sich also bei einem oder beiden um Halbleiterschalter handeln, beispielsweise MOSFETs oder IGBTs.

Handelt es sich bei wenigstens einem der beiden Elemente um einen rückwärtsleitfähigen Halbleiterschalter wie beispielsweise einem MOSFET, dann kann die Steuerungseinrichtung ausgestaltet sein, im zweiten Betriebsmodus den steuerbaren ersten und/oder dritten Leistungshalbleiter in der ersten Betriebssituation auszuschalten und den steuerbaren ersten und/oder dritten Leistungshalbleiter in der zweiten Betriebssituation einzuschalten.

Wiederum wird dadurch ein zusätzlicher Strompfad angeboten, durch den der Strom in der zweiten Betriebssituation, in der keine Spannung am Transformator anliegt und somit auch keine Energie im Transformator übertragen wird, weiterfließen kann mit den Vorteilen, die bereits für den ersten Betriebsmodus erläutert wurden.

Handelt es sich bei den Halbleiterschaltern um IGBTs, die nicht rückwärtsleitfähig sind, umfassen diese in der Regel in Rückwärtsrichtung leitende Freilaufdioden parallel zum eigentlichen Halbleiterschalter. Auch diese bieten in zweiten Betriebssituation einen zusätzlichen Strompfad, der zu einer besseren Verteilung der Abwärme führt. Der erste und/oder dritte Leistungshalbleiter kann (nur) eine Diode sein. In diesem Fall entfallen Schalthandlungen für diese Bauelemente. Der erste und zweite Betriebsmodus kann aber weiterhin verwendet werden.

Es ist auch möglich, dass die oben genannten Möglichkeiten und Varianten vermischt sind. Beispielsweise können der erste und dritte Leistungshalbleiter IGBTs sein und der zweite Leistungshalbleiter ein MOSFET. Ebenso ist es möglich, dass der zweite und dritte Leistungshalbleiter IGBTs oder MOSFETs sind und der erste Leistungshalbleiter eine Diode. In diesem Fall besteht eine vorteilhafte Ausgestaltung der Erfindung darin, dass die beiden seriell und gleichsinnig liegenden und gleichartigen Halbleiterschalter zusammen als Halbbrückenmodul aufgebaut sind. Es kann sich dabei um den ersten und zweiten oder um den zweiten und dritten Leistungshalbleiter handeln. Halbbrückenmodule sind eine übliche und daher kommerziell weitläufig und variantenreich verfügbare Aufbauform für Halbleiterschalter, die nach Art einer Halbbrücke, also seriell gleichsinnig verschaltet sind. Dadurch wird der Aufbau und die Integration in den Rest des kombinierten DC/DC-Wandlers vereinfacht. Insbesondere kann hierbei ein gemeinsamer Kühlkörper für das Halbbrückenmodul und die weiteren Leistungsmodule für den ersten bis achten Halbleiterschalter vorhanden sein. Insbesondere wird also auch dasjenige Leistungsmodul, das die beiden seriell liegenden Halbleiterschalter bereitstellt, in die Kühlung der anderen Leistungsmodule mit einbezogen. Hierdurch wird eine optimale Kühlung alle Leistungsschalter bei möglichst einfacher Herstellung des DC/DC-Wandlers erreicht.

In einer weiteren Variante für die Erfindung ist parallel zum zweiten Leistungshalbleiter ein vierter Halbleiterschalter vorhanden. In diesem Fall ist es zweckmäßig, wenn es sich um einen MOSFET handelt, es könnte aber auch ein IGBT sein. Weiterhin ist es zweckmäßig, wenn es sich in diesem Fall bei dem ersten bis dritten Leistungshalbleiter ebenso um MOSFETs handelt. Die Schaltung weist dann zwei Paare von Halbleiterschaltern auf, die sich einfach als zwei Halbleiterschaltermodule aufbauen lassen. Dadurch entstehen die oben bereits genannten Vorteile bezüglich der Leistungsmodule. Weiterhin ist dadurch ein weiterer Strompfad zwischen dem ersten unteren und dem zweiten oberen Gleichrichterausgang geschaffen, der zur Verlustvermeidung und Verlustwärmeverteilung beiträgt.

Der kombinierte DC/DC-Wandler weist insbesondere eine Nennleistung von mehr als 20 kW, insbesondere wenigstens 100 kW oder in besonderen Ausgestaltungen wenigstens 1 MW auf. Dafür ist es zweckmäßig, wenn die im kombinierten DC/DC-Wandler verbauten Leistungshalbleiter eine Stromtragfähigkeit von wenigstens 100 A und/oder eine Sperrspannungsfestigkeit von wenigstens 100 V aufweisen.

In einer vorteilhaften Ausgestaltung der Erfindung beträgt die Sperrspannungsfestigkeit des ersten bis dritten Leistungshalbleiters weniger als die maximale Ausgangsspannung des kombinierten DC/DC-Wandlers, also weniger als die doppelte Ausgangsspannung von erstem oder zweitem DC/DC-Wandler.

Im Folgenden wird die Erfindung anhand der in den Figuren dargestellten Ausführungsbeispiele näher beschrieben und erläutert. Es zeigen:
Figur 1 ein Schaltbild eines einzelnen Phase-Shift-DC/DC-Wandlers mit MOSFETs als Leistungsschaltern,
Figur 2 ein Schaltschema für Halbleiterschalter des Phase-Shift-DC/DC-Wandlers,
Figur 3 ein Schaltbild eines ersten kombinierten DC/DC-Wandlers mit zwei der einzelnen Phase-Shift-DC/DC-Wandler,
Figuren 4 und 5 Schaltschemata für Halbleiterschalter des ersten kombinierten Phase-Shift-DC/DC-Wandlers,
Figur 6 ein Schaltbild eines zweiten kombinierten DC/DC-Wandlers mit zwei der einzelnen Phase-Shift-DC/DC-Wandler.
Figur 7 ein Schaltbild eines dritten kombinierten DC/DC-Wandlers mit zwei der einzelnen Phase-Shift-DC/DC-Wandler.

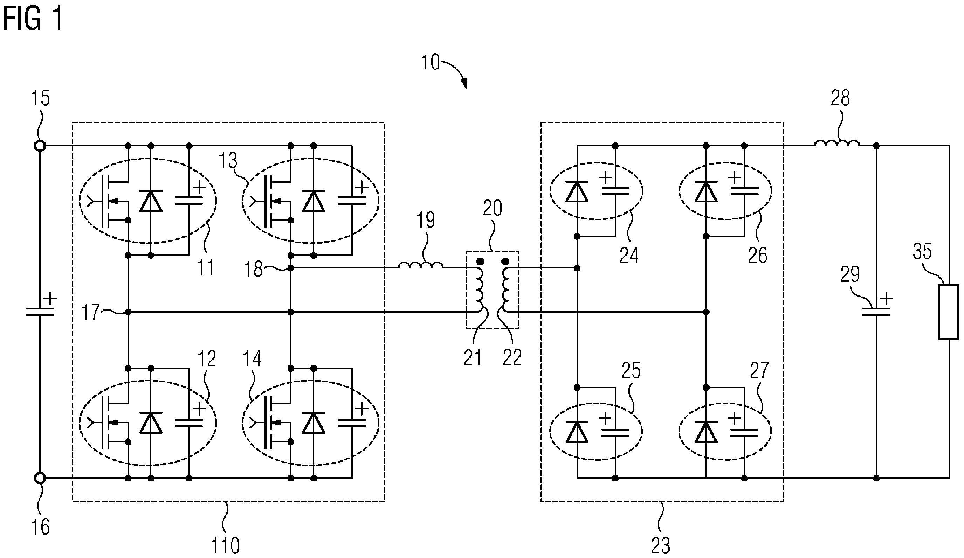

Figur 1 zeigt ein elektrisches Schaltbild eines DC/DC-Wandlers 10 vom Typ Phase-Shift-Full-Bridge (PSFB). Der DC/DC-Wandler 10 umfasst eine Vollbrücke 110 aus einem ersten bis vierten MOSFET (Metalloxid-Halbleiter FeldeffektTransistor) 11...14. Die MOSFETs 11...14 sind in Figur 1 zusammen mit ihrer Body-Diode und ihrer parasitären Ausgangskapazität dargestellt. Bei diesen zusätzlichen Bauteilen handelt es sich also in diesem Ausführungsbeispiel nicht um tatsächliche separate Bauteile.

Die MOSFETs 11...14 bilden dabei in bekannter Weise zwei parallelgeschaltete Halbbrücken, wobei jede der Halbbrücken zwei der MOSFETs 11...14 in gleichsinniger Serienschaltung umfasst. Die Vollbrücke 110 ist mit den Außenanschlüssen der Halbbrücken an Eingangsanschlüsse 15, 16 für eine Gleichspannung angeschlossen.

Zwischen die Mittelpunkte 17, 18 der Halbbrücken ist eine Serienschaltung aus einer Resonanzinduktivität 19 und der Primärseite 21 eines Transformators 20 geschaltet. Die Sekundärseite 22 des Transformators 20 wiederum ist mit einem Brückengleichrichter 23 verbunden. Der Brückengleichrichter 23 umfasst vier Dioden 24...27, die analog zu einer Vollbrücke zusammengeschlossen sind. Die Dioden 24...27 sind in Figur 1 ebenfalls zusammen mit ihrer parasitären Kapazität dargestellt, bei der es sich also ebenfalls nicht um ein tatsächliches separates Bauteil handelt.

Am Ausgang des Brückengleichrichters ist seriell zu einer symbolischen Last 35 eine für DC/DC-Wandler des Phase-Shift-Typs übliche Ausgangs-Induktivität 28 angeschlossen. Weiterhin ist ein Glättungs-Kondensator 29 parallel zum Ausgang des Brückengleichrichters, also parallel zur Last 35, angeschlossen.

Der DC/DC-Wandler 10 umfasst eine Steuerung für die MOSFETs 11...14, 31, 34, die Ein- und Ausschaltsignale für die MOSFETs 11...14, 31, 34 erzeugt und diese an die Treiber übermittelt.

Die Ansteuerung der MOSFETs 11...14 der Vollbrücke 17 erfolgt dabei in einer bekannten Weise für Phase-Shift-DC/DC-Wandler. Bei einfachen Wechselrichtern würden die jeweils diagonal zueinander liegenden MOSFETs 11...14, also einmal das Paar aus MOSFETs 11, 14 und zum anderen das Paar aus MOSFETs 12, 13 gemeinsam an- und ausgeschaltet.

Beim Phase-Shift-Betrieb passiert das Anschalten aber nicht gleichzeitig, sondern die leitenden Zeiträume der Schalter der beiden Halbbrücken sind zueinander zeitlich verschoben, unterliegen also einer Phasenverschiebung. Die Größe der Phasenverschiebung definiert den Tastgrad des Wandlers, wobei eine große Phasenverschiebung einem kleinen Tastgrad entspricht und umgekehrt. Die Phasenverschiebung kann dabei so erheblich sein, dass beide oberen Schalter oder beide unteren Schalter, also MOSFETs 11, 13 oder MOSFETs 12, 14 gleichzeitig eingeschaltet sind und die Primärseite 21 des Transformators 20 kurzschließen.

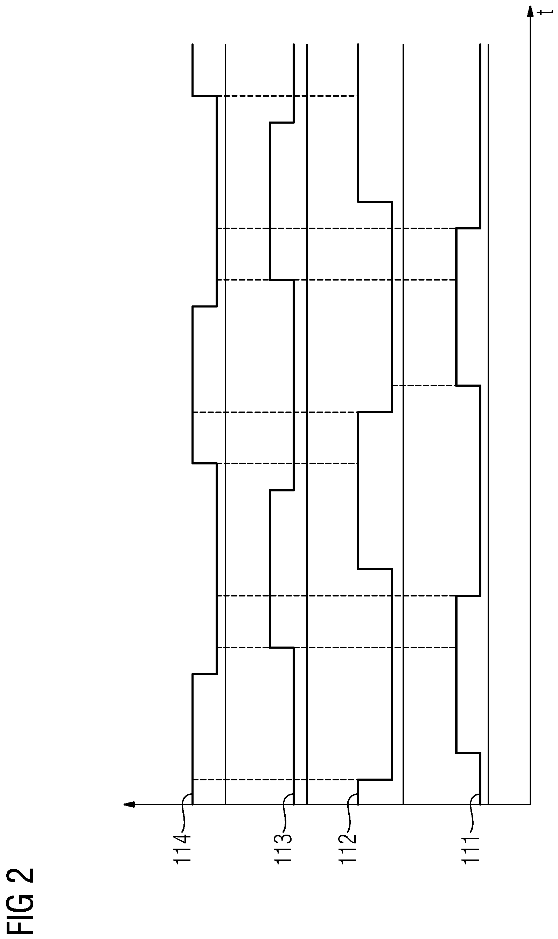

Ein entsprechendes Schaltschema ist ausschnittsweise in Figur 2 dargestellt. In Figur 2 zeigen die Linien die Schaltvorgänge 111...114 des ersten bis vierten MOSFET 11...14. Dabei bezeichnet das Niveau nahe der Basislinie den ausgeschalteten Zustand, während ein erhöhter Verlauf des Schaltvorgangs 111...114 den eingeschalteten Zustand bezeichnet.

Wie erkennbar ist, ist von den jeweils eine Halbbrücke bildenden MOSFETs 11...14, also dem ersten und zweiten MOSFET 11, 12 einerseits und dem dritten und vierten MOSFET 13, 14 andererseits zu jedem Zeitpunkt höchstens einer eingeschaltet, um die Eingangsspannung nicht kurzzuschließen. Dabei wird ein Pufferzeitraum eingehalten, in dem beide Schalter ausgeschaltet sind, um auch kurzzeitige Kurzschlüsse zu vermeiden, die ansonsten auftreten würden, da die Schalter nicht unendlich schnell schalten.

Weiterhin zeigen die Linien der Figur 2, dass die diagonal liegenden MOSFETs 11...14 nicht gleichzeitig an- und ausschalten, wie das bei einem einfachen Wechselrichter der Fall wäre. Vielmehr besteht eine Phasenverschiebung 150, also ein zeitlicher Versatz. Die Größe des Versatzes hängt von der aktuellen Betriebssituation ab, sodass Figur 2 lediglich einen möglichen und beispielhaften Verlauf zeigt. Die Phasenverschiebung 150 führt dazu, dass zwischen den Einschaltphasen der beiden oberen MOSFETs 11, 13 ein Überlapp besteht, ebenso zwischen den beiden unteren MOSFETs 12, 14. Während dieses Überlapps ist die Primärseite 21 des Transformators 20 kurzgeschlossen.

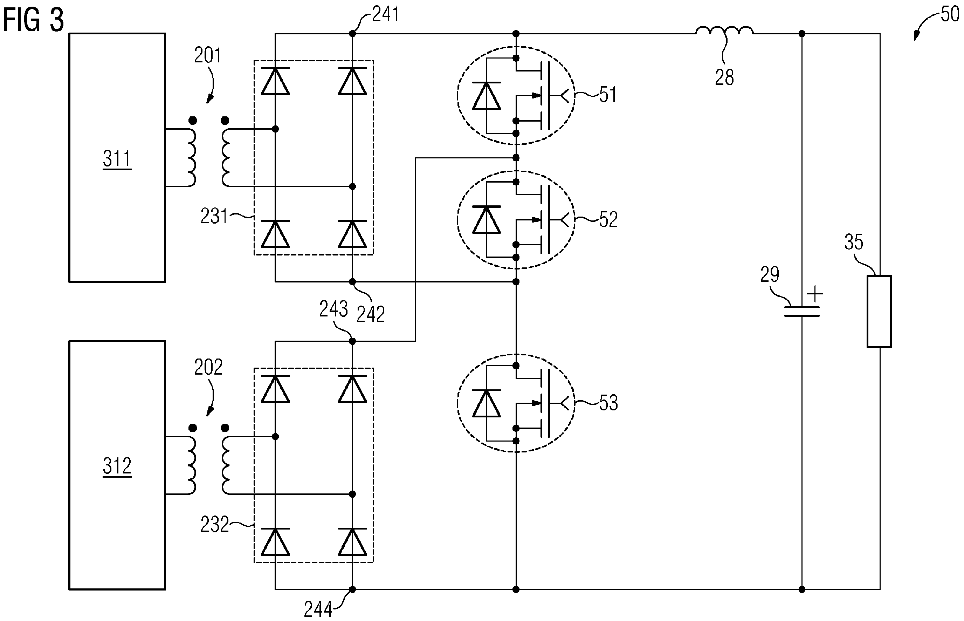

Figur 3 zeigt ein erstes Ausführungsbeispiel für einen kombinierten DC/DC-Wandler 50. Der kombinierte DC/DC-Wandler 50 umfasst zwei der in Figur 1 dargestellten Phase-Shift-DC/DC-Wandler 10. Der erste dieser Wandler umfasst eine erste Primärseitenschaltung 311, einen ersten Transformator 201 und einen ersten Brückengleichrichter 231. Der zweite der Wandler umfasst eine zweite Primärseitenschaltung 312, einen zweiten Transformator 202 und einen zweiten Brückengleichrichter 232.

Der erste Brückengleichrichter 231 weist einen ersten oberen und einen ersten unteren Gleichrichterausgang 241, 242 auf.

Der zweite Brückengleichrichter 232 weist einen ersten oberen und einen ersten unteren Gleichrichterausgang 243, 244 auf.

Der Ausgang des kombinierten DC/DC-Wandlers 50 ist nun nicht mit den Anschlüssen eines der Brückengleichrichter 231, 232 verbunden, sondern stattdessen mit dem oberen ersten Gleichrichterausgang 241 und dem unteren zweiten Gleichrichterausgang 244. An diesen ist seriell zu der symbolischen Last 35 die für DC/DC-Wandler des Phase-Shift-Typs übliche Ausgangs-Induktivität 28 angeschlossen. Weiterhin ist ein Glättungs-Kondensator 29 parallel zu den beiden genannten Anschlüssen 241, 244, also parallel zur Last 35, angeschlossen.

Weiterhin umfasst der kombinierte DC/DC-Wandler 50 eine Serienschaltung aus einem ersten bis dritten MOSFET 51...53. Der erste bis dritte MOSFET 51...53 sind dabei gleichsinnig angeordnet. In Figur 3 sind die MOSFETs mit ihrer jeweiligen Bodydiode eingezeichnet, es handelt sich also dabei nicht um ein gesondertes Bauteil. Es ist aber möglich, jeweils eine zusätzliche Diode als eigenes Bauteil hinzuzufügen. Ein oberer Außenanschluss dieser Serienschaltung, also der obere Anschluss des ersten MOSFET 51, ist mit dem ersten oberen Gleichrichterausgang 241 verbunden. Ein unterer Außenanschluss der Serienschaltung, also der untere Anschluss des dritten MOSFET 53, ist mit dem zweiten unteren Gleichrichterausgang 244 verbunden. Der erste untere Gleichrichterausgang ist mit einem Knotenpunkt zwischen dem zweiten und dritten MOSFET 52, 53 verbunden. Der zweite obere Gleichrichterausgang ist mit einem Knotenpunkt zwischen dem ersten und zweiten MOSFET 51, 52 verbunden.

Die Steuerung ist konfiguriert, zwei Betriebsmodi zu verwenden. In einem ersten Betriebsmodus wird der zweite MOSFET 52 ausgeschaltet und der erste und dritte MOSFET 51, 53 eingeschaltet, also leitend geschaltet. Dadurch sind der erste und zweite Gleichrichter 231, 232 parallelgeschaltet. Der mögliche Strom der beiden einzelnen DC/DC-Wandler 10 addiert sich damit und der kombinierte DC/DC-Wandler 50 kann insgesamt den doppelten Strom des einzelnen DC/DC-Wandlers 10 liefern.

Im zweiten Betriebsmodus wird der zweite MOSFET 52 eingeschaltet und der erste und dritte MOSFET 51, 53 ausgeschaltet. Dadurch wird bewirkt, dass der erste und zweite Gleichrichter 231, 232 in Serie geschaltet sind. Hierdurch addieren sich die von den beiden einzelnen DC/DC-Wandlern 10 erzeugten Spannungen und der kombinierte DC/DC-Wandler 50 kann insgesamt die doppelte Spannung eines der einzelnen DC/DC-Wandler bereitstellen.

Bezüglich des ersten bis dritten MOSFETs 51...53 werden in einem DC/DC-Wandler 10, 50 des Phase-Shift-Typs zwei Betriebssituationen unterschieden. Bei der ersten Betriebssituation liegt am Transformator 201, 202 eine Eingangsspannung an, die positiv oder negativ sein kann. Damit wird Energie von der Primärseite des DC/DC-Wandlers 10, 50 an die Sekundärseite des DC/DC-Wandlers 10, 50 übertragen. Diese Betriebssituation liegt dann vor, wenn weder die oberen MOSFETs 11, 13 noch die unteren MOSFETs 12, 14 gemeinsam eingeschaltet sind.

In der zweiten Betriebssituation liegt am Transformator 201, 202 keine Spannung an. Es wird in diesem Fall keine Energie von der Primärseite an die Sekundärseite übertragen. Diese Betriebssituation liegt vor, wenn die oberen MOSFETs 11, 13 gemeinsam eingeschaltet sind oder die unteren MOSFETs 12, 14 gemeinsam eingeschaltet sind. Die durch die Ausgangsinduktivität 28 gespeicherte Energie sorgt in dieser Betriebssituation für einen fortgesetzten Stromfluss (im nichtlückenden Betrieb) weiter zum Ausgang der Schaltung, also zur Last 35.

Die Steuerung ist so ausgestaltet, dass in der zweiten Betriebssituation derjenige oder diejenigen vom ersten bis dritten MOSFET 51...53 eingeschaltet werden, die im aktuellen Betriebsmodus ausgeschaltet sind.

Besteht der aktuelle Betriebsmodus also darin, die Gleichrichter für erhöhten Strom parallel zu schalten, ist der zweite MOSFET 52 normalerweise ausgeschaltet. In der zweiten Betriebssituation jedoch wird auch der zweite MOSFET 52 eingeschaltet.

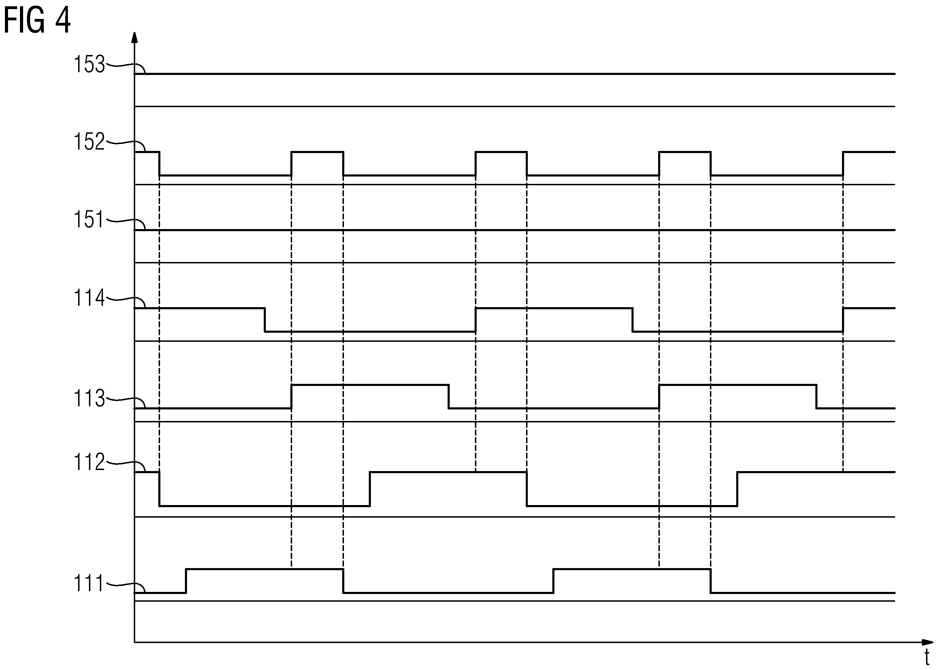

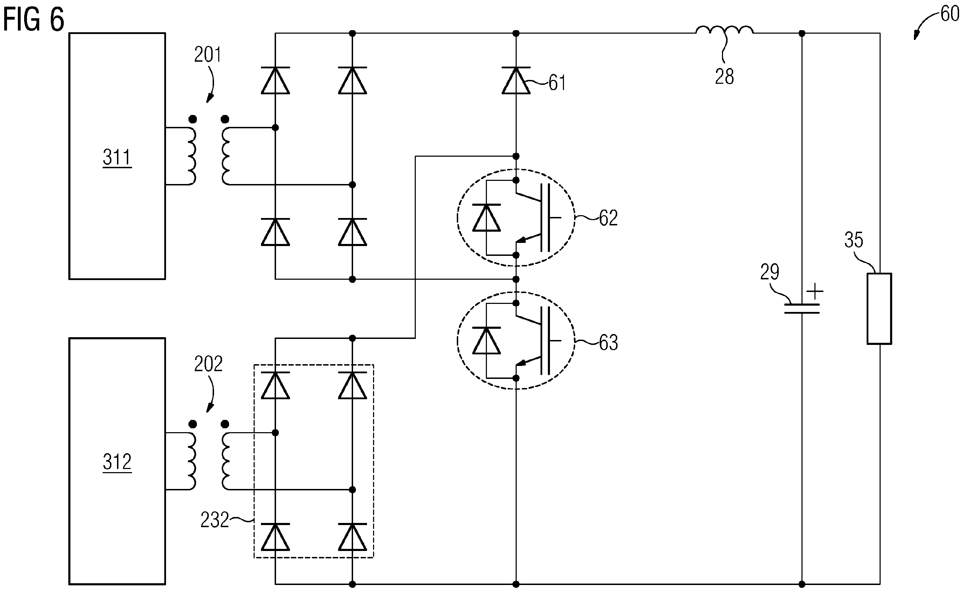

Die zusätzlichen Einschaltzeiten, die sich aus der Betriebssituation ergeben, sind in Figur 6 dargestellt. Figur 4 zeigt die beispielhaften Schaltvorgänge 111...114 der MOSFETs 11...14, die bereits in Figur 2 dargestellt waren und dazu die Schaltvorgänge 151...153 des ersten bis dritten MOSFET 51...53.

Der erste und dritte MOSFET 51, 53 sind passend zum Betriebsmodus dauerhaft eingeschaltet. In diesem Beispiel wird davon ausgegangen, dass Änderungen des Betriebsmodus nur in größeren Zeitabständen stattfinden. Im Beispiel einer Ladesäule für elektrische Fahrzeuge kann der Wechsel des Betriebsmodus beispielsweise bei Anschluss eines neuen Fahrzeugs mit einer anderen Batteriespannung stattfinden, also mit Abständen im Minutenbereich. Die Schaltvorgänge der Figuren 2 und 4 hingegen finden im Millisekundenbereich statt. Beispielsweise kann die Schaltfrequenz der MOSFETs 11...14 10 kHz oder 50 kHz betragen. Der zweite MOSFET 52 wird dann, wie in Figur 6 erkennbar, mit der doppelten Frequenz geschaltet, also beispielsweise 20 kHz oder 100 kHz, da sich pro Schaltzyklus zwei Einschaltphasen ergeben.

Besteht der aktuelle Betriebsmodus darin, die Gleichrichter für erhöhte Spannung in Serie zu schalten, sind normalerweise der erste und dritte MOSFET 51, 53 ausgeschaltet. In der zweiten Betriebssituation jedoch werden auch der erste und dritte MOSFET 51, 53 eingeschaltet.

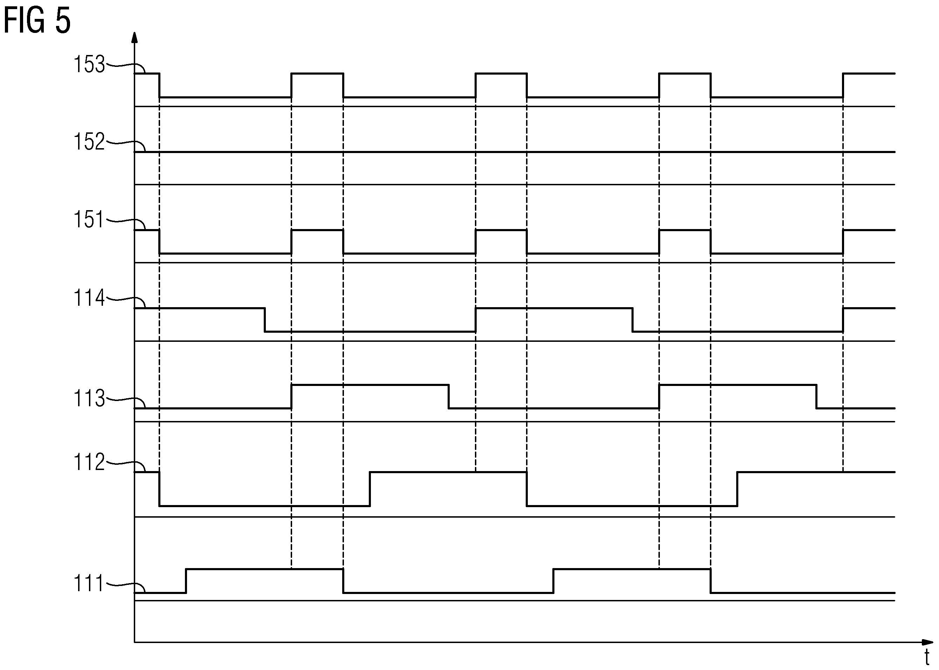

Die zusätzlichen Einschaltzeiten, die sich aus der Betriebssituation ergeben, sind in Figur 5 dargestellt. Figur 5 zeigt die beispielhaften Schaltvorgänge 111...114 der MOSFETs 11...14, die bereits in Figur 2 dargestellt waren und dazu die Schaltvorgänge 151...153 des ersten bis dritten MOSFET 51...53 für die zweite Betriebssituation.

Es ist erkennbar, dass der zweite MOSFET 52 passend zum Betriebsmodus dauerhaft eingeschaltet ist. Der erste und dritte MOSFET 51, 53 hingegen werden bei Überlapp der Einschaltzeiten der beiden oberen MOSFETs 11, 13 oder der beiden unteren MOSFETs 12, 14 eingeschaltet.

Durch das zusätzliche Einschalten des jeweiligen MOSFETs 51...53 findet der durch die Ausgangs-Induktivität 28 getriebene Strom zusätzlich zu den Dioden der Gleichrichter 231, 232 einen weiteren Freilaufpfad.

Da der erste bis dritte MOSFET 51...53 und die Gleichrichter 231, 232 in etwa parallelgeschaltet sind, sinkt insgesamt der elektrische Widerstand im Freilaufpfad. Dadurch sinken die insgesamt auftretenden elektrischen Verluste und somit der Wärmeeintrag in den Kühlkörper. Weiterhin verteilen sich die auftretenden Verluste auf eine größere Anzahl von Elementen, nämlich neben den Dioden nun auch auf die je nach Betriebsmodus zugeschalteten ersten bis dritten MOSFETs, was eine verbesserte Wärmeverteilung auf dem Kühlkörper ergibt.

Ein zweites Ausführungsbeispiel für die Erfindung wird anhand von Figur 6 erläutert. Figur 6 zeigt einen zweiten kombinierten DC/DC-Wandler 60. Dieser entspricht größtenteils dem DC/DC-Wandler 50 der Figur 3. Im Unterschied zu diesem umfasst die Serienschaltung des ersten bis dritten MOSFET 51...53 an deren jeweiliger Stelle eine erste Diode 61, einen ersten IGBT 62 und einen zweiten IGBT 63. Analog zum DC/DC-Wandler 50 der Figur 3 ist er zweite obere Gleichrichteranschluss 243 ist mit dem Potentialpunkt zwischen der ersten Diode 61 verbunden und der untere erste Gleichrichteranschluss 242 mit dem Potentialpunkt zwischen dem ersten und zweiten IGBT 62, 63 verbunden. Die IGBTs 62, 63 in Figur 6 umfassen in bekannter Weise parallel zum Schalter geschaltete Freilaufdioden.

In Figur 6 ist erkennbar, dass die beiden IGBTs 62, 63 gleichsinnig und in Serie geschaltet sind nach Art einer Halbbrücke, wenn sie auch in der Schaltung der Figur 6 nicht als typische Stromrichter-Halbbrücke verwendet und gesteuert werden. Daher ist es vorteilhaft möglich, für die IGBTs 62, 63 ein Leistungsmodul zu verwenden, in dem zwei IGBTs als Halbbrücke verschaltet sind. Dadurch ergibt sich ein günstiger und einfacher Aufbau mit bekannten Komponenten, in der keine Bauteile verschwendet werden. Das Leistungsmodul, das die IGBTs 62, 63 bereitstellt, wird in derselben Weise mit dem Kühlkörper für den DC/DC-Wandler verbunden wie diejenigen Leistungsmodule, die den ersten bis vierten MOSFET 11...14 bereitstellen.

Der Betrieb der IGBTs 62, 63 erfolgt in ähnlicher Weise wie beim ersten kombinierten DC/DC-Wandler 50. Im Unterschied dazu entfällt das An- und Abschalten des ersten MOSFET 51, da die erste Diode 61 nicht schaltbar ist. Die IGBTs 62, 63 werden aber so für jeden der Betriebsmodi so geschaltet wie der zweite und dritte MOSFET 52, 53.

Ein weiterer Unterschied besteht darin, dass die IGBTs 62, 63 keine Leitfähigkeit in Rückwärtsrichtung aufweisen (abgesehen von ihrer Freilaufdiode) und daher ein Anschalten zur Unterstützung des Freilaufs in der zweiten Betriebssituation nicht durchgeführt werden kann.

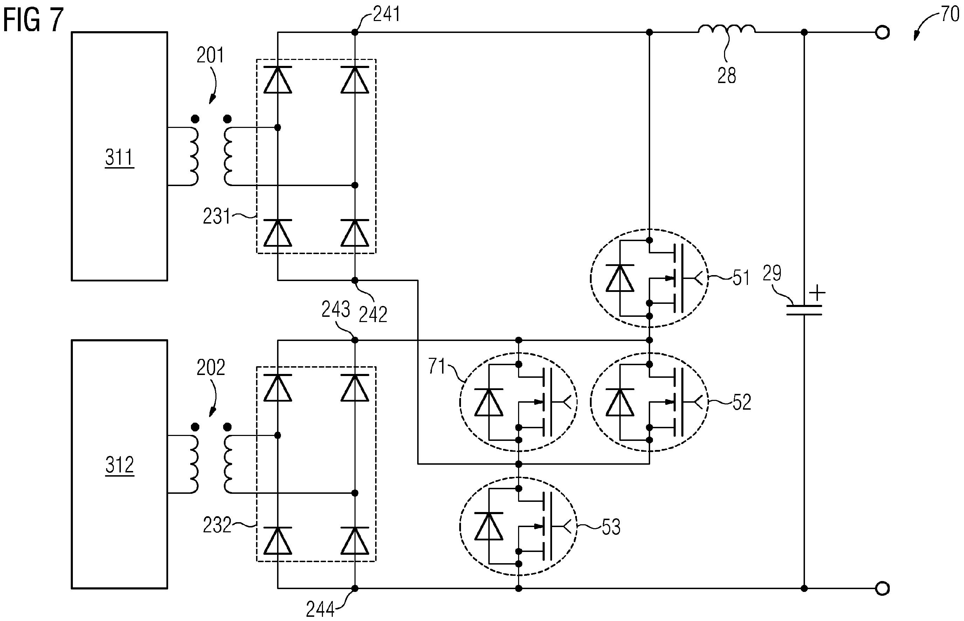

Ein drittes Ausführungsbeispiel für die Erfindung wird anhand von Figur 7 erläutert. Figur 7 zeigt einen dritten kombinierten DC/DC-Wandler 70. Dieser entspricht größtenteils dem DC/DC-Wandler 50 der Figur 3. Im Unterschied zu diesem umfasst die Serienschaltung des ersten bis dritten MOSFET 51...53 aber einen zusätzlichen vierten MOSFET 71, der parallel und gleichsinnig zum zweiten MOSFET 52 geschaltet ist.

In Figur 7 ist erkennbar, dass der erste und zweite MOSFET 51, 52 gleichsinnig und in Serie geschaltet sind nach Art einer Halbbrücke, wenn sie auch in der Schaltung der Figur 7 nicht als typische Stromrichter-Halbbrücke verwendet und gesteuert werden. Ebenso sind der dritte und vierte MOSFET 53, 71 gleichsinnig und in Serie geschaltet. Daher ist es vorteilhaft möglich, für die beiden Paare aus MOSFETs 51...53, 71 jeweils ein Leistungsmodul zu verwenden, in dem zwei IGBTs als Halbbrücke verschaltet sind. Dadurch ergibt sich analog zum DC/DC-Wandler 60 wieder ein günstiger und einfacher Aufbau.

Der Betrieb der MOSFETs 51...53, 71 erfolgt in ähnlicher Weise wie beim ersten kombinierten DC/DC-Wandler 50. Dabei werden zu jeder Zeit, zu der im kombinierten DC/DC-Wandler 50 der zweite MOSFET 52 eingeschaltet und ausgeschaltet wird, hier der zweite und vierte MOSFET 52, 71 gemeinsam eingeschaltet und ausgeschaltet.

### Bezugszeichen

- 10: DC/DC-Wandler
- 11...14: Wechselrichter-Halbleiterschalter
- 15, 16: Eingangsanschlüsse
- 17, 18: Mittelpunkte der Halbbrücken
- 19: Resonanzspule
- 20, 201, 202: Transformator
- 21: Primärseite
- 22: Sekundärseite
- 23, 231, 232: Brückengleichrichter
- 24...27: Dioden
- 241: oberer erster Gleichrichterausgang
- 242: unterer erster Gleichrichterausgang
- 243: oberer zweiter Gleichrichterausgang
- 244: unterer zweiter Gleichrichterausgang
- 28: Ausgangs-Induktivität
- 29: Glättungs-Kondensator
- 311, 312: Primärseitenschaltung
- 35: Last
- 38: Primärseite
- 50: erster kombinierter DC/DC-Wandler
- 51...53: erster bis dritter MOSFET
- 60: zweiter kombinierter DC/DC-Wandler
- 61: Diode
- 62, 63: erster, zweiter IGBT
- 71: vierter MOSFET
- 110: Vollbrücke
- 111...114, 151...153: Schaltverläufe
- 150: Phasenverschiebung

## Patentansprüche

1. Kombinierter DC/DC-Wandler (50, 60, 70), umfassend
- einen ersten DC/DC-Wandler des Phase-Shift-Typs (10), aufweisend einen ersten Transformator (20, 201) und einen an die Sekundärseite des ersten Transformators (20, 201) angeschlossenen ersten Gleichrichter (23, 231) mit einem ersten oberen und einem ersten unteren Gleichrichterausgang (241, 242),
- einen zweiten DC/DC-Wandler des Phase-Shift-Typs (10), aufweisend einen zweiten Transformator (20, 202) und einen an die Sekundärseite des zweiten Transformators (20, 202) angeschlossenen zweiten Gleichrichter (23, 232) mit einem zweiten oberen und einem zweiten unteren Gleichrichterausgang (243, 244),
- einen zwischen den ersten oberen und den zweiten oberen Gleichrichterausgang (241, 243) geschalteten ersten Leistungshalbleiter (51, 61),
- einen zwischen den zweiten oberen und den ersten unteren Gleichrichterausgang (243, 242) geschalteten zweiten Leistungshalbleiter (52, 62), der ein steuerbarer Halbleiterschalter ist,
- einen zwischen den ersten unteren und den zweiten unteren Gleichrichterausgang (242, 244) geschalteten dritten Leistungshalbleiter (53, 63),
- eine Steuerungseinrichtung für die Halbleiterschalter (11...14, 51...53, 62, 6, 71) des kombinierten DC/DC-Wandlers (50, 60, 70), wobei die Steuerungseinrichtung ausgestaltet ist,
- für einen ersten Betriebsmodus, in dem der erste und zweite DC/DC-Wandler (10) parallelgeschaltet sind, den zweiten Leistungshalbleiter (52, 62) abzuschalten und den ersten und dritten Leistungshalbleiter (51) einzuschalten, soweit es sich um steuerbare Leistungshalbleiter handelt,
- für einen zweiten Betriebsmodus, in dem der erste und zweite DC/DC-Wandler (10) seriell geschaltet sind, den zweiten Leistungshalbleiter (52, 62) einzuschalten und den ersten und dritten Leistungshalbleiter (63) auszuschalten, soweit es sich um steuerbare Leistungshalbleiter handelt.

2. Kombinierter DC/DC-Wandler (50, 60, 70) nach Anspruch 1, bei dem die Steuerungseinrichtung ausgestaltet ist, im ersten Betriebsmodus den zweiten Leistungshalbleiter (52, 62) in einer ersten Betriebssituation auszuschalten, in der am Transformator (20, 201, 202) eine Spannung anliegt und den zweiten Leistungshalbleiter (20, 201, 202) in einer zweiten Betriebssituation einzuschalten, in der keine Spannung am Transformator (20, 201, 202) anliegt.

3. Kombinierter DC/DC-Wandler (50, 60, 70) nach Anspruch 1 oder 2, bei dem der erste und/oder dritte Leistungshalbleiter (53, 63) steuerbar ist, insbesondere es sich um Halbleiterschalter handelt.

4. Kombinierter DC/DC-Wandler (50, 60, 70) nach Anspruch 3, bei dem die Steuerungseinrichtung ausgestaltet ist, im zweiten Betriebsmodus den steuerbaren ersten und/oder dritten Leistungshalbleiter (53, 63) in der ersten Betriebssituation auszuschalten und den steuerbaren ersten und/oder dritten Leistungshalbleiter (53, 63) in der zweiten Betriebssituation einzuschalten.

5. Kombinierter DC/DC-Wandler (50, 60, 70) nach einem der vorangehenden Ansprüche, bei dem die Gleichrichter (23, 231, 232) Brückengleichrichter mit jeweils vier Dioden sind.

6. Kombinierter DC/DC-Wandler (50, 60, 70) nach einem der vorangehenden Ansprüche, bei dem die Gleichrichter aktive Gleichrichter mit steuerbaren Halbleiterschaltern sind.

7. Kombinierter DC/DC-Wandler (50, 60, 70) nach einem der vorangehenden Ansprüche, bei dem zwischen den ersten oberen Gleichrichterausgang (241) und den zweiten unteren Gleichrichterausgang (244) eine Serienschaltung mit einer Ausgangs-induktivität (28) und einem Glättungskondensator (29) geschaltet ist.

8. Kombinierter DC/DC-Wandler (50, 60, 70) nach einem der vorangehenden Ansprüche, bei dem der erste und/oder dritte Leistungshalbleiter eine Diode (61) ist.

9. Kombinierter DC/DC-Wandler (50, 60, 70) nach einem der vorangehenden Ansprüche, bei dem der zweite und der erste oder dritte Leistungshalbleiter (51...53, 62, 63) zusammen als Halbbrückenmodul aufgebaut sind.

10. Kombinierter DC/DC-Wandler (50, 60, 70) nach Anspruch 1, bei dem der erste DC/DC-Wandler (10) einen ersten bis vierten Halbleiterschalter (11...14) und eine erste Resonanzspule (19) umfasst, wobei die Halbleiterschalter (11...14) eine erste Vollbrücke bilden und die erste Resonanzspule (19) mit der Primärseite des ersten Transformators (20, 201) eine erste Serienschaltung bildet, wobei die erste Serienschaltung zwischen die Mittelpunkte der Halbbrücken der ersten Vollbrücke geschaltet ist, und bei dem der zweite DC/DC-Wandler (10) einen fünften bis achten Halbleiterschalter und eine zweite Resonanzspule (19) umfasst, wobei die Halbleiterschalter eine zweite Vollbrücke bilden und die zweite Resonanzspule (19) mit der Primärseite des zweiten Transformators (20, 202) eine zweite Serienschaltung bildet, wobei die zweite Serienschaltung zwischen die Mittelpunkte der Halbbrücken der zweiten Vollbrücke geschaltet ist

11. Kombinierter DC/DC-Wandler (50, 60, 70) nach Anspruch 10, bei dem die Steuerungseinrichtung ausgestaltet ist, den ersten und zweiten DC/DC-Wandler (10) nach Art eines Phase-Shift-Wandlers zu betreiben, indem sie für die erste und für die zweite Vollbrücke zwischen den Schaltzeitpunkten der Halbleiterschalter (11...14) einer jeweiligen ersten Halbbrücke und den Schaltzeitpunkten einer jeweiligen zweiten Halbbrücke eine als Phasenverschiebung wirkende Zeitdauer verstreichen lässt und die Zeitdauer bei wenigstens einem Teil der Schaltzyklen so wählt, dass für einen Zeitraum beide obere Leistungsschalter einer der Vollbrücken gemeinsam eingeschaltet sind.

12. Kombinierter DC/DC-Wandler (50, 60, 70) nach einem der vorangehenden Ansprüche mit einem gemeinsamen Kühlkörper für die Leistungsmodule, die die ersten bis achten Halbleiterschalter (11...14) sowie die ersten bis dritten Leistungshalbleiter (51...53, 61...63, 71) umfassen.

13. Kombinierter DC/DC-Wandler (50, 60, 70) nach einem der vorangehenden Ansprüche, bei dem die Stromtragfähigkeit der Halbleiterschalter (51...53, 61...63, 71) wenigstens 100 A beträgt und/oder bei dem die Sperrspannungsfestigkeit der Halbleiterschalter (51...53, 61...63, 71) wenigstens 100 V beträgt.
